Europäisches Patentamt

European Patent Office

Office européen des brevets

(19)

(11) Numéro de publication : **0 097 092**
**B1**

(12)

# FASCICULE DE BREVET EUROPÉEN

(45) Date de publication du fascicule du brevet :
03.12.86

(51) Int. Cl.⁴ : **G 11 B 7/08**, G 11 B 7/00

(21) Numéro de dépôt : 83401155.3

(22) Date de dépôt : 07.06.83

(54) **Procédé et dispositif optique de focalisation d'un faisceau d'énergie lumineuse sur un plan de référence d'un support d'informations, ainsi que ce support.**

(30) Priorité : 15.06.82 FR 8210407

(43) Date de publication de la demande :
28.12.83 Bulletin 83/52

(45) Mention de la délivrance du brevet :
03.12.86 Bulletin 86/49

(84) Etats contractants désignés :
DE GB IT NL SE

(56) Documents cités :
EP-A- 0 019 379
EP-A- 0 050 967
FR-A- 2 311 326
US-A- 3 919 697
NEUES AUS DER TECHNIK, no. 5, 15 octobre 1979,
Selten 1-2, Vogel-Verlag, Würzburg, DE. Article 542:
"Synchronisation des Datenbitstromes bei Aufzeichnung auf einem scheibenförmigen Aufzeichnungsträger"
PATENTS ABSTRACT OF JAPAN, vol. 2, no. 64 (E-33),
17 mai 1978, page 2100 E 78
PATENT ABSTRACTS OF JAPAN, vol. 4, no. 134 (P-
28), 19 septembre 1980, page 9 P 28

(73) Titulaire : THOMSON-CSF
173, Boulevard Haussmann
F-75379 Paris Cedex 08 (FR)

(72) Inventeur : Gerard, Jean-Louis
THOMSON-CSF SCPI 173, bld Haussmann
F-75379 Paris Cedex 08 (FR)
Inventeur : Berthet, Pierre
THOMSON-CSF SCPI 173, bld Haussmann
F-75379 Paris Cedex 08 (FR)
Inventeur : Bricot, Claude
THOMSON-CSF SCPI 173, bld Haussmann
F-75379 Paris Cedex 08 (FR)
Inventeur : Audoin, Michel
THOMSON-CSF SCPI 173, bld Haussmann
F-75379 Paris Cedex 08 (FR)

(74) Mandataire : Weinmiller, Jürgen et al
Lennéstrasse 9
D-8133 Feldafing (DE)

## Description

La présente invention concerne un dispositif de mise en œuvre d'un procédé de focalisation d'un faisceau d'énergie lumineuse sur un plan de référence d'un support d'informations, notamment un support en forme de disque sur lequel les informations sont enregistrées le long de pistes sous forme de perturbations détectables par des moyens optiques. L'invention concerne également le support utilisé à cette fin.

De nombreux systèmes optiques d'enregistrement et/ou lecture d'information le long de pistes ont été décrits dans l'art connu. Lorsqu'il s'agit d'enregistrer des informations sous forme séquentielle, par exemple des informations vidéo, généralement les pistes ne sont pas matérialisées à l'avance mais plutôt créées en temps réel au moment de l'enregistrement. L'information est enregistrée le long des pistes ayant la forme d'une spirale unique s'étendant de la zone périphérique du disque vers une zone centrale ou l'inverse ou encore ayant la forme de cercles concentriques centrés sur l'axe de rotation du disque.

Dans tous ces systèmes, des dispositions doivent être adoptées pour assurer un suivi radial correct des pistes à l'enregistrement et/ou à la lecture, et tout d'abord ces pistes doivent être créées d'une façon ou d'une autre.

Dans les systèmes les plus simples, on compte sur la précision des organes d'avance de la tête d'enregistrement pour créer ces pistes en même temps que l'enregistrement des informations, les pistes étant définies simplement par la présence de ces informations. Lors de la lecture, des informations enregistrées par exemple sous la forme de micro-reliefs, interfèrent avec un faisceau de lecture focalisé dans le plan de la face d'enregistrement du disque. Le défilement de ces micro-reliefs sous la tache de focalisation module le faisceau et cette modulation est détectée à l'aide de cellules photoélectriques convertissant les variations d'intensité lumineuse en signaux électriques. Ces signaux électriques peuvent être également utilisés dans un but de suivi de pistes.

Le procédé qui vient d'être décrit nécessite que l'avance de la tête d'enregistrement doit présenter une très grande stabilité mécanique, ce pour éviter que deux sillons successifs ne se chevauchent ou du moins soient mal discernables lors de la lecture. Dans un but d'améliorer le système qui vient d'être décrit, il a été proposé dans la demande de brevet français publiée sous le numéro 2 366 636, un procédé utilisant la dernière piste inscrite ou l'une des pistes précédemment inscrite comme référence.

Cependant, lorsque l'on désire enregistrer des informations de façon aléatoire, par exemple dans les applications concernant l'informatique, il est en général nécessaire de matérialiser à l'avance les pistes le long desquelles des informations peuvent être enregistrées. Pour ce faire, il est d'usage de créer une prégravure sous quelque forme que ce soit. Dans un exemple de réalisation décrit dans la demande de brevet français publiée sous le numéro 2 365 854, lors de la fabrication du support, les pistes sont matérialisées sous la forme d'un sillon lisse créé dans une couche auxiliaire de ce support. Ces pistes peuvent être détectées même en l'absence de tout enregistrement d'information, cet enregistrement étant effectué dans une phase ultérieure dans une couche photosensible ou thermosensible en contact avec la couche auxiliaire.

Dans une variante préférée de l'art connu, les pistes prégravées peuvent être confondues avec les régions dans lesquelles sont enregistrées les informations. On obtient alors un système dit mono-piste.

Dans d'autres procédés, la piste ou les pistes prégravées sont distinctes des pistes le long desquelles sont enregistrées les informations. On obtient alors des systèmes dits bi-pistes ou multi-pistes.

Le principal inconvénient du procédé qui vient d'être décrit est qu'il ne permet pas une densité d'enregistrement maximale puisqu'il nécessite, au minimum, une piste supplémentaire de prégravure pour une piste d'information prégravée. En outre, il nécessite l'utilisation de deux faisceaux, l'un pour le suivi radial de la piste prégravée et l'autre pour l'écriture ou la lecture d'informations sur la piste destinée à l'enregistrement.

Les supports du type dit mono-piste, comportant une prégravure, ne sont pas non plus exempts d'inconvénients. Ils nécessitent généralement l'utilisation de deux faisceaux, l'un d'enregistrement et l'autre de suivi radial. En outre, si la piste prégravée est facilement discernable du restant du disque (zones interpistes) en l'absence d'enregistrement d'information, il n'en est plus de même lorsque des informations sont enregistrées. Il peut en résulter, si des précautions ne sont pas prises, des inversions de contrastes conduisant à des erreurs de suivi.

Pour pallier ces inconvénients, il a été proposé un dispositif de suivi radial de piste mettant en œuvre un support d'information comportant une prégravure utilisée pour ce suivi constituée uniquement par des éléments discrets ou « drapeaux » répartis le long des pistes.

Réalisée suivant plusieurs variantes, la prégravure est constituée d'une suite d'éléments discrets non contigus matérialisant l'axe moyen des pistes. La répartition spatiale de ces éléments discrets peut être uniforme ou non. Selon une première variante, chaque élément discret est constitué par un tronçon de piste lisse. Selon une deuxième variante, chaque élément discret comporte plusieurs tronçons définissant un code particulier. Selon d'autres variantes, chaque élément comporte une ou plusieurs portions décalées par rapport à l'axe moyen. Enfin chacun des éléments de prégravure peut être lui-même précédé d'un élément de prégravure auxiliaire utilisé dans un but de synchronisation. Le dispositif de suivi de piste comprend des moyens photodétecteurs, des circuits de mesures comportant par exemple des échantillonneurs-bloqueurs ou des circuits intégrateurs à mémoire, et des circuits d'échantillonnage. Un signal d'erreur de suivi radial de piste est élaboré à partir de l'évolution des signaux détectés lors de passages successifs dans une zone éclairée de la surface du disque par une tache de suivi de piste.

Outre le suivi radial correct assuré préférentiellement par le procédé qui vient d'être rappelé, une seconde exigence associée à la lecture ou l'écriture d'informations sur un support optique, concerne la focalisation des faisceaux d'énergie lumineuse mis en œuvre. Ces faisceaux doivent être focalisés sur le support en une tache qui doit suivre en permanence les fluctuations éventuelles de niveau des pistes. Pour ce faire, il est connu que la focalisation correcte du faisceau soit obtenue au moyen d'un dispositif d'asservissement de focalisation comportant une boucle de rétroaction maintenant constante la distance entre le dispositif optique et la surface gravée du support. L'accrochage et le maintien du dispositif d'asservissement sont obtenus par détection des fluctuations d'un signal électrique dérivé, dans une première variante, de la lecture des informations enregistrées et, dans une seconde variante, de la détection de la prégravure matérialisant les pistes, par exemple sous forme d'un sillon lisse.

On se trouve alors confronté aux mêmes difficultés que précédemment rappelées en relation avec le suivi radial.

Il a été également proposé de se servir des mêmes éléments discrets de prégravure, dans leurs variantes comportant des tronçons décalés par rapport à l'axe moyen des pistes, pour assurer aussi la focalisation.

Bien que ce procédé dissocie la focalisation du contenu de l'information enregistrée, les perturbations accidentelles de la structure des éléments de prégravure jouent cependant un rôle dans la qualité de la focalisation même si ce rôle n'est plus déterminant. En outre, la qualité de la focalisation est influencée par des pertes éventuelles de signal dues à la non-détection passagère de ces éléments ou « drop-outs » selon l'expression anglo-saxonne bien connue, ce pour des raisons diverses liées à la qualité du support et/ou des moyens de détections opto-électroniques des éléments de prégravure.

L'invention se fixe pour but de pallier les inconvénients de l'art connu. Pour ce faire, il est ménagé le long des pistes des zones exemptes de tous enregistrements y compris sous formes d'éléments discrets de prégravure ou de tronçons de piste lisse tels qu'ils viennent d'être rappelés. Ces zones sont donc constituées par des plages vierges de la surface du disque. Or il a été constaté expérimentalement que la surface des disques présente moins d'anomalies susceptibles de se traduire par des fluctuations parasites de la focalisation, que les structures des éléments enregistrés utilisés dans l'art connu à cette fin.

L'invention tire avantage de ce phénomène et le procédé de focalisation conforme à celle-ci consiste à dériver les signaux nécessaires à l'asservissement vertical d'une tête d'écriture et/ou de lecture, c'est-à-dire à la focalisation correcte d'un faisceau d'énergie lumineuse sur une surface de référence, de la détection de ces zones vierges à l'aide de moyens opto-électroniques de détection.

L'invention a donc pour objet un support d'information comportant des motifs de prégravure agencés dans une surface de référence dont une partie lisse entoure complètement chacun desdits motifs ; lesdits motifs matérialisant, sous forme d'éléments, des pistes adjacentes ayant un pas régulier ; chacun desdits éléments de piste étant subdivisé en zones non contiguës réservées à l'emmagasinage des données et séparées l'une de l'autre par des zones intermédiaires contenant uniquement des motifs de prégravure, caractérisé en ce que ladite partie lisse renferme des portions distribuées le long de l'un quelconque desdits éléments de piste ; lesdites portions pouvant contenir entièrement un contour circulaire centré sur l'axe moyen de l'élément de piste correspondant et dont le diamètre avoisine ledit pas.

L'invention a encore pour objet un dispositif optique de focalisation d'un faisceau d'énergie lumineuse mettant en œuvre ce support d'information.

L'invention sera mieux comprise et d'autres caractéristiques apparaîtront à l'aide de la description qui suit en référence aux figures annexées et parmi lesquelles :

La figure 1 représente un disque de l'art connu et un dispositif de suivi de piste et de focalisation d'un faisceau sur un tel disque ;

les figures 2 et 3 représentent une prégravure de disque selon plusieurs variantes de réalisation ;

la figure 4 est un exemple de codage de l'information sur un disque pouvant être utilisé par le procédé de l'invention selon un premier mode d'exécution ;

la figure 5 est un schéma électrique d'un dispositif de focalisation de mise en œuvre de ce premier mode d'exécution ;

les figures 6 et 7 illustrent deux variantes de réalisation de la configuration d'un disque dans un second mode d'exécution du procédé de l'invention ;

la figure 8 est un schéma électrique d'un dispositif de focalisation de mise en œuvre de ce premier mode d'exécution ;

les figures 9 et 10 représentent de façon détaillée des organes opto-électroniques utilisables dans les deux modes d'exécution ;

la figure 11 est un diagramme explicatif du fonctionnement du dispositif de l'invention selon le second mode.

L'invention concernant un procédé et un dispositif de focalisation dans un système utilisant un support d'information de type prégravé, il est utile de rappeler les éléments constitutifs principaux d'un système optique enregistreur et/ou lecteur de supports d'information, notamment de supports en forme de disques lisibles et inscriptibles optiquement.

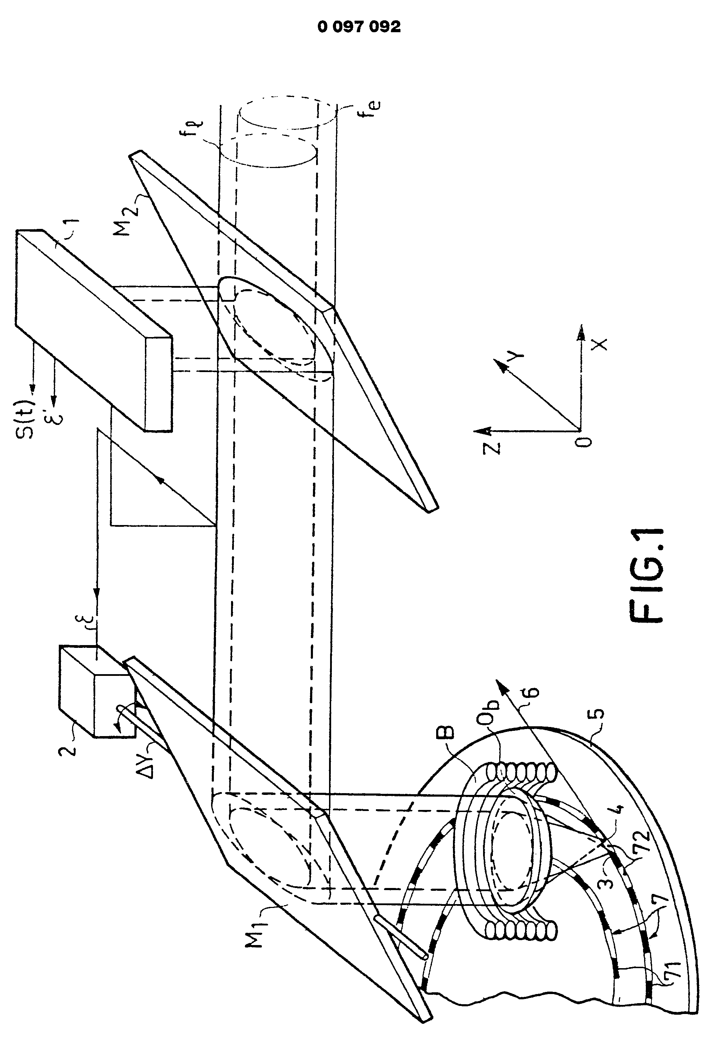

La figure 1 représente un support d'information 5 de l'art connu en forme de disque circulaire pouvant tourner dans un plan XOY autour d'un axe parallèle au troisième axe d'un trièdre de référence XYZ. La face inférieure de ce disque est ici supposée lisse ; la face supérieure qui lui est parallèle est également lisse, mais comporte une piste prégravée 7 sous forme d'une piste lisse dont la largeur sensiblement constante est de l'ordre ou inférieure au micromètre.

On peut utiliser un tel disque, soit pour inscrire des informations en un point déterminé d'une des pistes lisses inscrites au préalable, soit pour lire des informations inscrites en un point quelconque de cette piste. Le disque, par exemple d'un diamètre d'environ 30 cm, est animé d'un mouvement de rotation communiqué par un moteur d'entraînement solidaire du chassis du système optique d'enregistrement-lecture. Dans cet exemple de réalisation, le dispositif d'accès à une piste prédéterminée du disque comprend une partie fixe comprenant deux sources d'énergie lumineuse (non représentées sur la figure 1) et une partie mobile constituée par la tête d'enregistrement-lecture. Comme il est connu, cette dernière comprend un objectif du type microscope $O_b$, solidaire d'une bobine électromagnétique B se déplaçant dans le champ magnétique d'un aimant permanent (non représenté) assurant l'asservissement vertical et un miroir galvanométrique $M_1$ assurant l'asservissement radial. Les sources d'énergie lumineuse, comme il est également connu, comprennent des sources lasers, par exemple des lasers à gaz He Ne ou semi-conducteurs. Les lasers à gaz délivrent un faisceau parallèle polarisé dont la section est très faible. Le faisceau laser doit être agrandi de façon à recouvrir la pupille d'entrée de l'objectif, ce quelque soit la position de l'objectif le long de l'axe optique. Pour réaliser cette exigence, il a été proposé dans la demande de brevet français FR-A-2 462 758 d'intercaler entre les sources d'énergie lumineuse et la tête d'enregistrement-lecture mobile une optique de type afocal.

Pour la lecture, un faisceau laser $f_1$ parallèle produit par une source laser (non représentée sur la figure 1), est agrandi à l'aide d'un afocal, dont le grossissement est tel que le faisceau émergeant, également parallèle, recouvre la pupille d'entrée de l'objectif $O_b$. Le miroir $M_1$ dévie les rayons se propageant parallèlement à une direction parallèle à l'axe OX suivant une direction sensiblement parallèle à l'axe OZ. L'objectif $O_b$ focalise le faisceau de lecture au point 3 sur le disque support d'information 5. Ce disque est animé d'un mouvement de rotation symbolisé par la flèche 6. L'objectif et le miroir sont solidaires d'un équipage mobile constituant la tête d'enregistrement-lecture. L'avance de cet ensemble mobile peut être obtenue par tout moyen connu.

On utilise ensuite le même afocal pour le faisceau d'enregistrement $f_e$, lequel ayant été préalablement modulé. Afin de différencier les taches de lecture et d'enregistrement sur le disque, on incline très légèrement le faisceau d'enregistrement $f_e$ par rapport au faisceau de lecture $f_1$ de manière à ce que le décentrement du faisceau d'enregistrement sur la pupille d'entrée de l'objectif soit très limité et à ce qu'on puisse négliger le déplacement du faisceau lors d'un déplacement radial de la tête. Il s'ensuit que quelque soit la position de l'objectif le long de l'axe optique, le faisceau d'écriture est focalisé au foyer de l'objectif. La tache d'écriture est focalisée au point 4.

Pour l'enregistrement de données numériques, les pistes 7 sont agencées de préférence sous la forme de cercles concentriques. Elles peuvent être matérialisées ou non avant toute inscription de données par une prégravure sous forme de sillons « lisses ». La largeur des éléments de piste est choisie légèrement inférieure au diamètre de la tache lumineuse et ces éléments sont séparés par des plages interpistes dont la largeur est légèrement supérieure à la largeur de la piste. La surface supérieure du support reçoit une couche mince appropriée à l'inscription par un procédé thermooptique.

En ce qui concerne la phase d'enregistrement du disque, l'insolation de la couche sensible servant à l'inscription est effectuée par une tache 4 dont l'intensité est modulée par exemple par un signal électrique en créneaux de largeurs variables ou constantes selon les applications qui constituent le support de l'information. L'incorporation de l'information dans le signal modulateur est effectuée selon le cas, par modulation de fréquence ou de phase, ou par tout mode de codage capable de fournir un message codé par impulsions ; l'information peut aussi être elle-même directement le signal modulateur.

Pour détecter les faisceaux de lecture réfléchis par le disque, on interpose, par exemple, une lame semi-transparente $M_2$ sur le trajet du faisceau $f_1$. Le faisceau réfléchi est alors envoyé vers des moyens photodétecteurs et de traitement de signal qui peuvent délivrer d'une part un signal d'erreur $\varepsilon$ qui permet de commander le moteur 2 pilotant la position du miroir $M_1$, en réalisant ainsi un asservissement radial, d'autre part un signal d'erreur $\varepsilon'$ qui permet de commander la bobine B solidaire de l'objectif OB en réalisant ainsi un asservissement de focalisation.

Les moyens de traitement délivrent aussi un signal S(t) représentatif des informations utiles enregistrées sur le disque. En effet lors du défilement des éléments enregistrés sur les pistes 7, on recueille en lecture un signal S(t) qui traduit fidèlement les variations temporelles du signal enregistré sur la piste.

En phase écriture, le faisceau de lecture $f_1$ peut être utilisé pour assurer l'asservissement radial à l'aide de la prégravure mais peut également être utilisé dans un but de contrôle en temps réel de l'information en cours d'enregistrement ou « monitoring » selon l'expression anglosaxonne couramment utilisée.

Dans une variante préférée de l'art connu, la prégravure utilisée à des fins de suivi radial se présente sous la forme d'éléments discrets ou « drapeaux » 71 qui seuls définissent l'axe moyen de la piste à suivre. Cette piste est donc virtuelle. Compte tenu de la vitesse de rotation du disque, la répartition spatiale de ces éléments de prégravure doit être suffisante pour satisfaire le critère de SHANNON : typiquement sur un disque de 30 cm de diamètre dont une couronne de largeur 8 cm représente la zone utile d'enregistrement, 40 000 pistes environ sont disponibles et comportent chacune de l'ordre de 3 500 drapeaux.

Ces drapeaux délimitent des zones 72 destinées à l'enregistrement de données d'informations utiles.

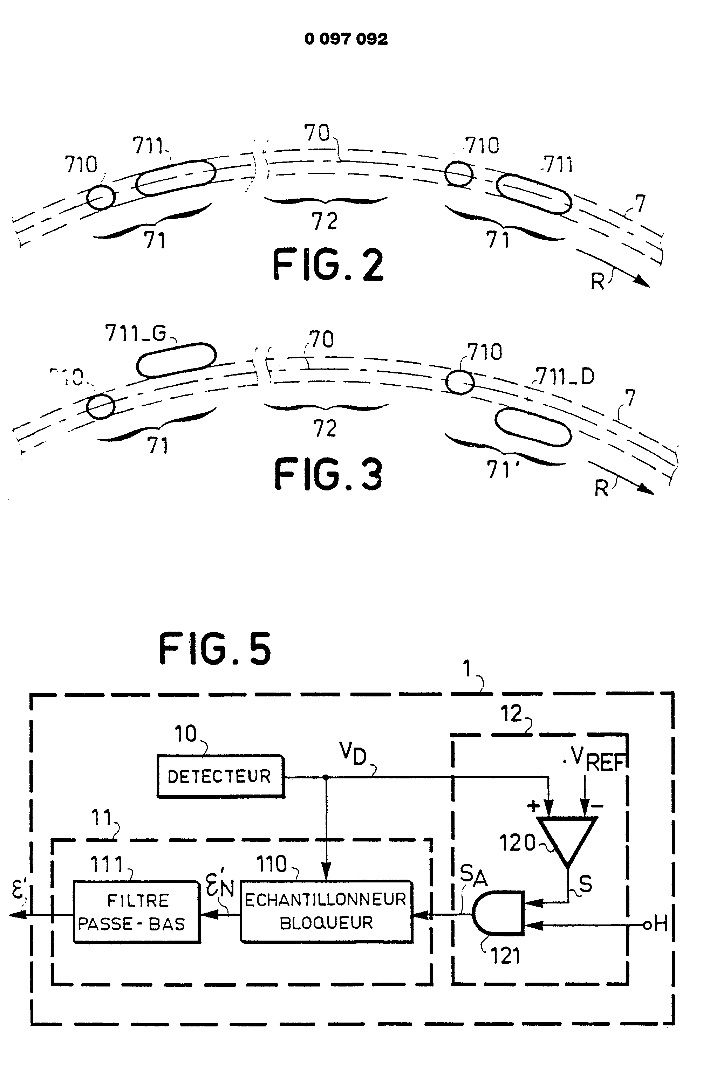

La figure 2 illustre un exemple de réalisation parmi d'autres de drapeaux 71 définissant l'axe moyen 70 de pistes 7 le long desquelles peuvent être enregistrées les informations. Comme il vient d'être rappelé, entre deux drapeaux 71 identiques, il existe une zone 72 destinée à l'enregistrement de données d'information utile. Le sens de rotation du disque a été représenté sur la figure 2 par la flèche R.

Il doit bien être entendu que la piste 7 représentée sur la figure est une piste virtuelle dont l'axe moyen 70 représente la trajectoire idéale que doit suivre un faisceau d'écriture. Elle peut cependant être matérialisée dans certaines applications par un sillon, « lisse » avant enregistrement dans les zones 72. Les signaux nécessaires à l'asservissement radial de la tête d'écriture seront dérivés de la détection des drapeaux 71 par des moyens de suivi de piste qui seront décrits de façon plus détaillée dans ce qui suit. Lorsque les éléments de prégravure 71 défilent sous la tache de focalisation d'un faisceau de lecture ou comme il sera également détaillé ultérieurement, le faisceau d'écriture, un signal de suivi de piste peut être généré de façon classique. Les moyens de traitement des signaux doivent cependant mémoriser la mesure pendant l'intervalle de temps s'écoulant entre deux passages de drapeaux successifs dans la zone éclairée par la tache de suivi de piste. Selon l'invention, le signal d'asservissement peut être déduit de l'évolution du signal mesuré à ces deux instants.

Il est également nécessaire, si l'on ne désire enregistrer des informations que dans la zone utile 72 localisée entre deux drapeaux 71 successifs, d'inhiber le faisceau d'écriture lorsqu'un de ces drapeaux se trouve dans la zone éclairée par la tache d'écriture. La discrimination entre les drapeaux et l'information enregistrée entre deux drapeaux peut être facilitée si ces drapeaux sont dotés d'une structure qui permet de les identifier sélectivement ou si chaque drapeau est associé à un drapeau de synchronisation supplémentaire codé.

La figure 2 illustre une de ces possibilités. Chaque drapeau 71 est divisé en plusieurs tronçons 710, 711 dont les longueurs et la répartition spatiale définissent un code qui permet d'identifier un drapeau sans ambiguïté.

Pour améliorer la qualité de l'asservissement radial, il est également connu de wobuler le faisceau de suivi en lui imprimant une légère oscillation à fréquence fixe de part et d'autre de l'axe moyen de la piste. On peut créer cette wobulation d'une autre manière à l'aide de motifs asymétriques par rapport à l'axe 70 du suivi. Pour ce faire chaque drapeau comporte, outre un ou plusieurs tronçons éventuels centrés sur l'axe moyen de la piste et indiquant le début du drapeau, un ou plusieurs autres tronçons décalés par rapport à cet axe moyen.

Dans une variante, la plus simple, illustrée par la figure 3, un premier drapeau 71 comporte un tronçon 710 centré sur l'axe moyen de la piste 70 et un second tronçon 711-G décalé à gauche de cet axe. Le drapeau suivant 71' comporte également un premier tronçon 710 centré sur l'axe moyen 70 et un second tronçon 711-D décalé à droite de l'axe. Cette succession est répétée. L'écart entre les tronçons décalés et l'axe 70 de la piste est de l'ordre d'une fraction de la largeur de la tache de suivi.

Dans d'autres variantes, non illustrées, chaque drapeau comporte au moins un tronçon décalé à gauche et un tronçon décalé à droite.

Si l'on désire une configuration d'enregistrement sous forme de bloc, la répartition spatiale des drapeaux 71, 71' est de façon préférentielle uniforme.

On peut également se servir, du moins si certaines variantes de drapeaux sont mises en œuvre, de ces drapeaux pour générer le signal $\varepsilon'$ nécessaire pour assurer la focalisation correcte de la tache d'exploration des pistes sur un plan déterminé du disque.

Généralement les éléments de prégravure 71 ainsi d'ailleurs que la gravure correspondant à l'information enregistrée dans les zones 72, se présentent sous la forme de perturbations de la couche thermosensible, en creux ou en bosses. Le plus souvent deux niveaux sont ainsi définis, l'un pouvant être confondu avec le plan défini par la surface de la couche superficielle du matériau thermo-sensible avant tout enregistrement, c'est-à-dire également avec le plan des zones interpistes. On associe à ces deux niveaux un des états logiques « 1 » ou « 0 ».

Dans les systèmes monopistes de l'art connu plus ancien le signal $\varepsilon'$ est perturbé par la lecture des informations enregistrées même si les pistes sont pourvues de sillons lisses préenregistrés. En effet, l'enregistrement ultérieur de données d'informations tend à diminuer le contraste qui existe entre les zones préenregistrées sous forme d'un sillon lisse et les zones interpistes et peut même dans des cas extrêmes, l'inverser. Ces effets parasites peuvent conduire à des décrochages de l'asservissement vertical de l'objectif $O_b$.

Bien que le procédé de l'art connu, plus récent, qui consiste à découpler la focalisation de la configuration des données enregistrées, par nature aléatoire, et à générer les signaux à partir de drapeaux à structure mieux définie et dont la répartition le long des pistes peut, dans une variante préférée, être uniforme, conduise à de meilleurs résultats, il est encore possible d'améliorer la qualité de la focalisation et c'est le but que fixe l'invention. Ce procédé est décrit dans le document EP-A-0 089 274 (qui est compris dans l'état de la technique défini à l'article 54 (3) CBE).

En effet, des pertes d'informations restent possibles (« drop-outs ») et, comme il a été rappelé, il a été constaté expérimentalement que l'état de surface des zones vierges d'enregistrement est statistiquement moins perturbé que les plans définis par les deux niveaux associés aux éléments de prégravure:

L'invention tire avantage de ce phénomène.

Selon la caractéristique principale de l'invention des plages vierges de tout enregistrement, y compris de prégravure sous forme de sillons ou de tronçons lisses, sont ménagées le long des pistes.

Ces plages doivent présenter une configuration telle que la plus petite des dimensions de celles-ci soit supérieure à la plus grande des dimensions de la tache d'exploration des pistes, ce lorsque le faisceau est focalisé dans le plan de la surface de ces zones. En outre, le pas entre deux pistes, c'est-à-dire la distance interpiste, doit être plus grand que la dimension de la tache suivant cette direction.

En respectant cette condition, l'invention peut être mise en œuvre selon deux modes d'exécution principaux susceptibles eux-mêmes de plusieurs variantes de réalisation.

Selon un premier mode, si la densité d'enregistrement n'est pas critique, les plages vierges peuvent être entrelacées avec les gravures représentant les informations. On peut, pour cela, utiliser les zones de piste délimitées par deux éléments de gravure successifs. Il faut pour cela que la piste ne soit pas matérialisée par une prégravure sous la forme d'un sillon lisse. D'autres conditions doivent également être réalisées : les motifs gravés représentant l'information doivent être de préférence de surface nettement plus petite que la surface de la tache d'exploration et laisser des sites entre deux gravures successives de longueur supérieure à cette tache. La localisation de ces sites peut être systématique réalisée entre deux positions réservées à la gravure ou au contraire, les sites peuvent être répartis de façon plus aléatoire.

Selon un second mode d'exécution, qui constitue un mode préféré, des sites spécifiques sont ménagés le long des pistes et ces sites sont précédés par des drapeaux, c'est-à-dire des éléments discrets de prégravure synchronisant le début des plages vierges destinées aux seules fins de génération d'un signal de focalisation. Ces drapeaux doivent être sélectivement détectables. Pour ce faire, ils peuvent être associés à un code spécifique, par exemple être constitués d'une suite de tronçons de prégravure dont les dimensions respectives et/ou la répartition spatiale les distinguent des codes associés aux autres éléments de gravure, notamment les codes associés aux données d'informations utiles enregistrées.

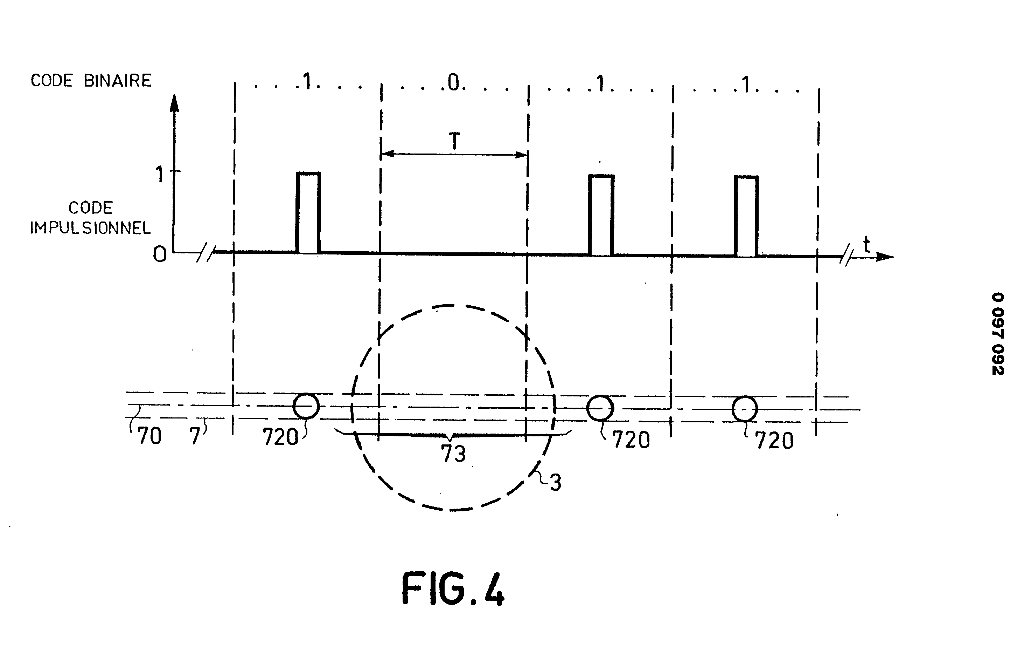

La figure 4 illustre un exemple d'enregistrement de données dont la configuration permet la mise en œuvre d'une variante selon le premier mode d'exécution.

Pour fixer les idées, un mot binaire à quatre bits de configuration arbitraire «1 0 1 1 » est pris comme exemple. Une catégorie de code parmi d'autres pouvant satisfaire les exigences précédemment énoncées est le code impulsionnel. Les états logiques « 1 » sont représentés par une impulsion brève positive qui va se traduire par un élément de gravure 720 de faible dimension créé le long de la piste 7 et centré sur l'axe moyen 70. Sur le diagramme de la figure 4 représentant le code impulsionnel, l'intervalle de temps T correspond à la période de base d'enregistrement d'un élément binaire ou bit, compte tenu de la vitesse de défilement du support d'informations. Les états logiques « 0 » se traduisent par l'absence de gravure sur la piste et se confondent avec les plages restantes du support, notamment les plages interpistes, ce naturellement si la piste ne comporte pas un sillon lisse prégravé ce qui constitue une des exigences à respecter.

On réalise que si la distance séparant deux gravures 720 est plus grande que la tache d'exploration 3 focalisée sur le plan de référence constituée par la surface de la couche de matériau thermooptique recouvrant le support, les plages 73 correspondant à l'enregistrement des états logiques « 0 » débordant éventuellement sur les deux plages adjacentes en dehors des gravures 720 sont utilisables aux fins de la génération de signaux d'asservissement de la focalisation.

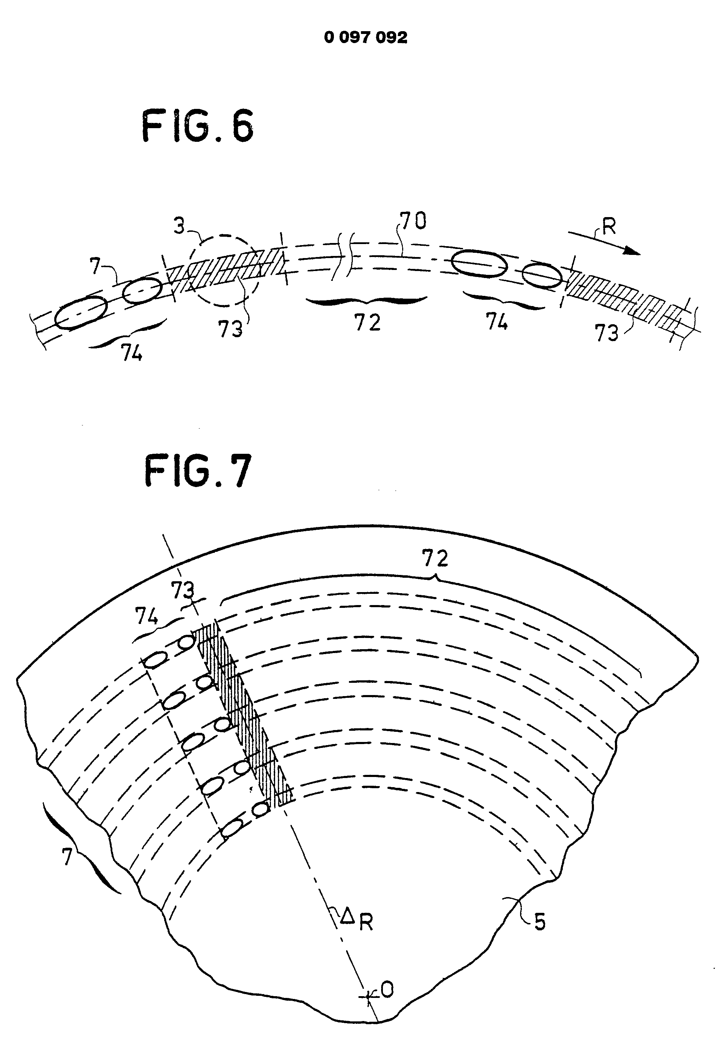

La figure 5 représente des circuits opto-électroniques permettant de générer les signaux $\varepsilon'$ d'asservissement verticaux. Ces circuits peuvent s'insérer dans un système analogue à celui décrit en relation avec la figure 1 et sont localisés dans le bloc de commande portant la référence 1 sur cette figure. Seuls les circuits d'asservissement verticaux sont spécifiques à l'invention, les autres circuits sont communs à l'art connu et ne nécessitent pas de description particulière.

Ces circuits comprennent un organe opto-électronique de détection qui sera décrit en détail ultérieurement. Cet organe qui détecte le rayonnement issu de la plage éclairée par la tache 3 comporte au moins une cellule photodétectrice délivrant un signal de sortie $V_D$ transmis à des circuits 11 d'élaboration du signal $\varepsilon'$ d'erreur d'asservissement vertical et à des circuits d'échantillonnage 12. Ces derniers ont pour rôle de générer des signaux d'autorisation de fonctionnement transmis aux circuits 11 centrés sur les intervalles de temps correspondant aux enregistrements d'états logiques « 0 », c'est-à-dire des plages de piste 7 sans gravure plus grandes que la tache d'exploration 3 (figure 4). Pour ce faire, les circuits d'échantillonnage 12 comprennent un organe 120 de comparaison avec un seuil $V_{REF}$. Ce dernier circuit peut être constitué par un amplificateur à entrées différentielles qui reçoit sur des entrées directe (+) et d'inversion

(—) respectivement les signaux $V_D$ et $V_{REF}$ et qui délivre un signal de sortie S, par exemple à l'état logique « 1 », lorsque le signal détecté $V_D$ passe au-dessous d'un seuil déterminé. Le signal S est transmis à l'une des entrées d'une porte logique ET : 121. L'autre entrée reçoit des signaux impulsionnels d'horloge H centrés sur le milieu des périodes T (Fig. 4). Pour ce faire, on peut dériver ces signaux d'horloge des signaux d'horloge classiques dits de « bits » qui sont mis en œuvre dans les systèmes d'enregistrement/lecture de données numériques. Ces signaux définissent précisément la période de base T et synchronisent l'enregistrement ou la lecture des données. En particulier les états logiques « 0 » n'étant associés à aucune gravure, ces signaux sont nécessaires pour distinguer l'absence de gravure correspondant à un « 0 » et des autres plages sans gravure. Lorsqu'il y a concordance entre un état logique « 0 » et l'apparition d'une impulsion d'horloge H, un signal d'autorisation $S_A$ est présent sur la sortie de la porte ET : 122. Ce signal $S_A$ définit une fenêtre d'analyse et autorise la prise en compte du signal $V_D$ par les circuits d'élaboration du signal d'erreur ε' à l'intérieur de l'intervalle de temps de la fenêtre d'analyse. Ces circuits peuvent être constitués dans l'exemple illustré par la figure 4 par un élément échantillonneur bloqueur 110 mémorisant le signal $V_D$ entre deux prises d'échantillon, c'est-à-dire entre les passages dans la plage éclairée par la tache d'exploration 3 de deux plages sans gravure telles que définies dans ce qui précède. Le signal de sortie $ε'_N$ est alors un signal en marche d'escalier. Pour être exploitable, il doit être « lissé », par exemple à l'aide d'un filtre passe-bas 111 délivrant sur sa sortie le signal d'erreur ε' transmis aux organes d'asservissement vertical de l'objectif $O_B$, c'est-à-dire essentiellement au bobinage B.

La figure 6 illustre une première variante de réalisation selon le second mode, préférentiel, d'exécution de l'invention. Des sites constitués de plages vierges 73 sont aménagés le long des pistes 7 et sont associés à des drapeaux 74 qui les précèdent. Si l'asservissement radial est réalisé à l'aide de la détection de drapeaux spécifiques, ces drapeaux peuvent être utilisés dans le cadre de l'invention en lieu et place des drapeaux 74 et jouent ainsi un double rôle tout en évitant la diminution de la densité d'enregistrement résultant de l'enregistrement de drapeaux supplémentaires.

Les drapeaux peuvent être de tous types et, sans que cela soit limitatif, être réalisés par exemple selon l'une quelconque des variantes principales d'exécution illustrées par les figures 2 et 3. La seule contrainte est que ces drapeaux doivent être sélectivement détectables entre toutes les configurations de gravures présentes sur le disque.

Bien que hachurées sur la figure 6 dans un but d'illustration, il doit être entendu que les limites des plages vierges 73 dans des directions autres que celles de l'axe moyen 70 sont virtuelles. Ces limites ne sont d'ailleurs pas critiques. Il suffit que le pas interpiste soit supérieur à la dimension de la tache d'exploration 3 suivant une direction radiale.

La figure 7 illustre une seconde variante de réalisation, préférentielle, du même mode d'exécution. Suivant cette variante, le disque est sectorisé et toutes les plages 73, ainsi que les drapeaux associés 74, sont alignés sur un axe radial $Δ_R$ passant par le centre de rotation du disque 5. Dans un but de simplification seules cinq pistes 7 concentriques ont été représentées. Suivant l'axe $Δ_R$ toutes les plages vierges 73 sont confondues en une plage unique ayant la forme d'un quadrilatère rectangle dont la plus grande dimension est parallèle à l'axe $Δ_R$.

Dans la réalité, comme il a été indiqué, un disque de 30 cm de diamètre comprend 40 000 pistes environ réparties dans une couronne de largeur 8 cm ou zone utile d'enregistrement. Chaque piste comporte environ 3 500 plages vierges et autant de drapeaux associés.

Cette disposition a l'avantage d'autoriser un pas interpiste plus réduit, c'est-à-dire une plus grande densité d'enregistrement. En effet, la tache d'exploration 3 peut déborder sur une piste adjacente sans rique d'intercepter un élément de gravure de cette piste. La focalisation est alors rendue entièrement indépendante des erreurs de suivi radial.

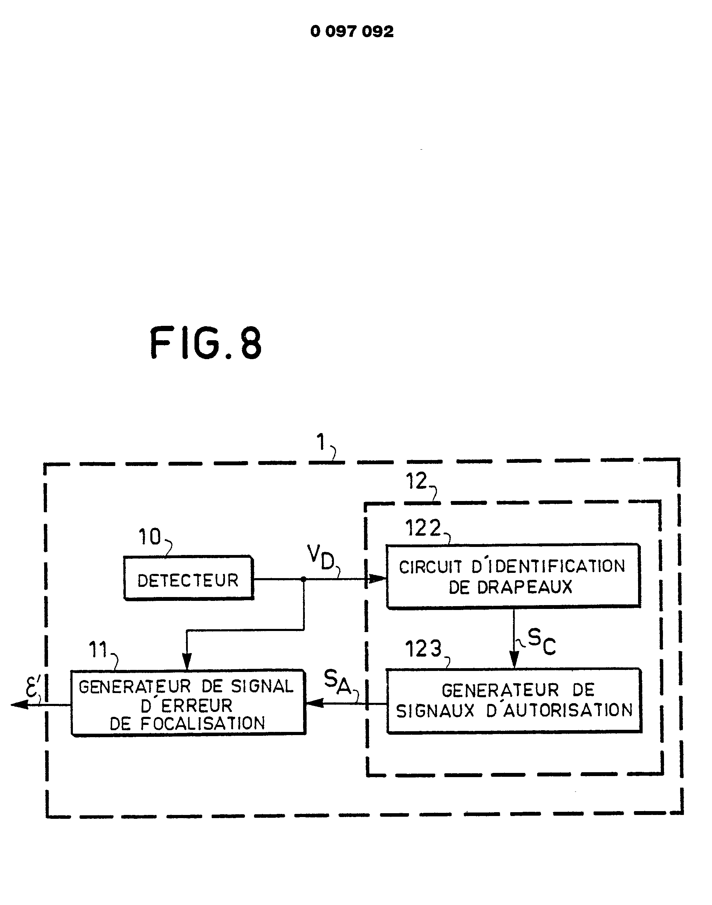

La figure 8 représente un exemple de circuits d'élaboration du signal ε' adaptés au mode préférentiel d'exécution de l'invention.

Outre le détecteur 10 et le générateur 11 du signal d'erreur ε' qui sont communs aux circuits décrits en relation avec la figure 5 et qui ne seront pas redécrits, ils comportent également des circuits d'échantillonnage 12 délivrant le signal d'autorisation $S_A$ et recevant le signal $V_D$ délivré par le détecteur 10. Cependant, dans le cadre du mode préférentiel, ces circuits comprennent un circuit d'identification de drapeaux 122, par exemple un décodeur logique reconnaissant le code spécifique associé aux drapeaux 74 précédant les plages vierges 73 et délivrant un signal d'initialisation $S_C$, par exemple impulsionnel, d'un générateur 123 du signal d'autorisation $S_A$. Celui-ci peut être avantageusement constitué à base de bascules monostables initialisées par une des transitions du signal $S_C$ et délivrant un signal de sortie définissant une fenêtre d'analyse de durée θ et suffisamment retardée de manière à ce que, vu la vitesse de défilement des pistes dans la zone éclairée par la tache d'exploration 3, celle-ci se trouve centrée sur la plage vierge 73 au moment où le signal d'autorisation $S_A$ est généré et, corrélativement, la mesure prise en compte par l'échantillonneur-bloqueur 110.

Dans toutes les variantes qui viennent d'être décrites, on peut remplacer l'échantillonnage-blocage (figure 5 : circuit 110) par une détection crête ou une intégration également suivie d'une comparaison d'une impulsion à l'autre, génération d'un signal en marches d'escalier $ε'_N$ et lissage pour obtenir le signal définitif ε'.

Le procédé qui vient d'être décrit dans ses deux modes de réalisation principaux est compatible avec tous les procédés de suivi de piste et de lecture d'information. Il peut en particulier être mis en œuvre dans un système monopiste-monofaisceau. Dans ce cas le faisceau unique sert à l'écriture, pour assurer le suivi radial de préférence en utilisant les drapeaux 74 et à la génération du signal d'asservissement vertical $\varepsilon'$ selon l'enseignement de l'invention. Les organes opto-électroniques mis en œuvre dans ces procédés peuvent également être utilisés pour générer le signal $V_D$.

La détection peut s'effectuer selon de nombreux procédés connus. A titre d'exemples, il peut être utilisé un dispositif de mise en œuvre de type asymétrique selon l'enseignement du brevet français FR-B-2 325 953 ou de type astigmatique selon l'enseignement du brevet français FR-B-2 271 590.

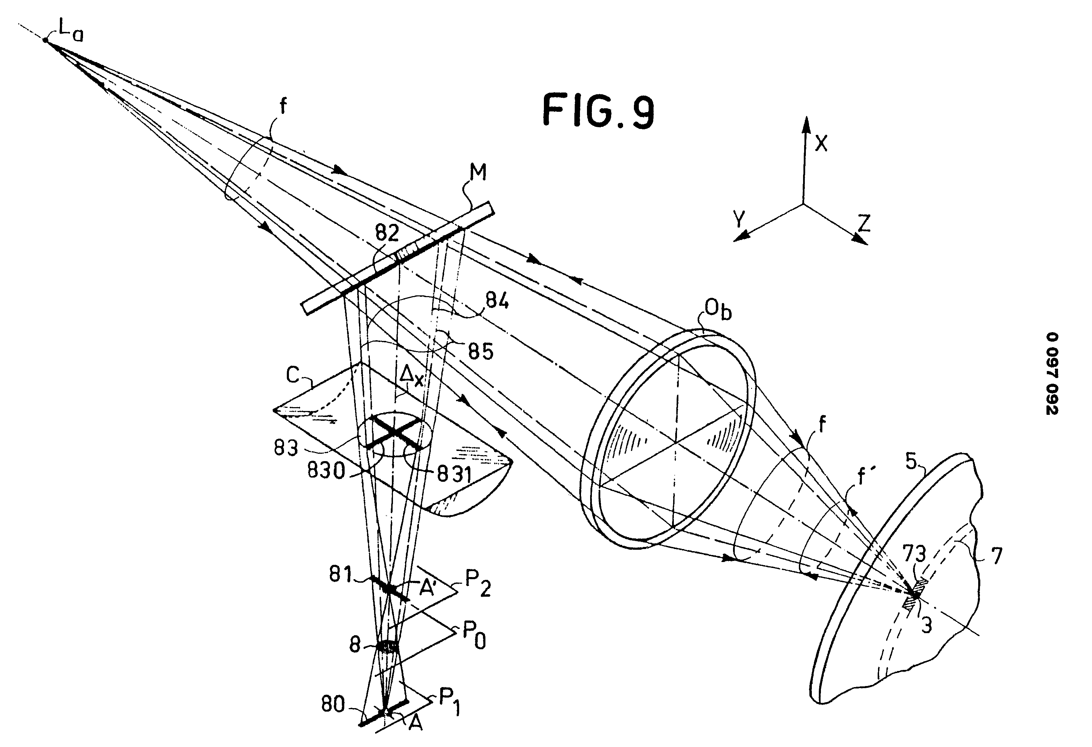

Pour illustrer l'invention de façon concrète, le fonctionnement d'un dispositif astigmatique coopérant avec le dispositif des figures 5 ou 8 va être rappelé en relation avec les figures 9 à 10. On se place dans le cadre d'un système monopiste-monofaisceau.

Sur la figure 9 sont représentés une source d'énergie rayonnée $L_a$ émettant un faisceau f selon l'axe OZ d'un repère orthonormé OXYZ ; des moyens M de séparation de l'énergie rayonnée, tel qu'un miroir semi-transparent, faisant avec l'axe OZ un angle de $\pi/4$ radians par exemple ; un objectif $O_b$ d'axe optique Ox, faisant converger le faisceau f en une tache 3 sur le support 5. La source $L_a$ peut être considérée comme étant ponctuelle. Il s'agit par exemple de la face émissive d'une diode laser.

Une fraction au moins du faisceau f est réfléchie par le support 5 : ce faisceau réfléchi traverse l'objectif $O_b$ puis est réfléchi par le miroir semi-transparent M pour converger en un point A, symétrique de la source $L_a$ par rapport au miroir M, situé sur un axe $\Delta_X$ parallèle à OX ; par le point A passe un plan normal à l'axe $\Delta_X$ repéré $P_1$. On interpose sur l'axe $\Delta_X$ un dispositif optique C, permettant de rendre astigmatique l'ensemble optique placé sur le trajet du faisceau réfléchi f ; un tel dispositif peut être réalisé à l'aide d'une lentille cylindrique, l'axe du cylindre étant par exemple choisi parallèle à l'axe OZ. Ainsi qu'il est connu, la lentille cylindrique C a pour effet de faire correspondre à la source ponctuelle $L_a$ un segment de droite 80, de part et d'autre du point A dans le plan $P_1$, parallèle à l'axe OY dans l'exemple représenté sur la figure. Aux fins de clarté, on a schématisé sur le dessin les traces 82 et 83, qui sont sensiblement circulaires, du faisceau réfléchi f', sur le miroir M et sur la lentille cylindrique C, ainsi que les diamètres 830 et 831 respectivement ; les rayons 85 définissent le segment 81 après convergence en un point A' de l'axe $\Delta_X$ dans le plan $P_2$ ; les rayons convergent au point A. On choisit un plan $P_0$ d'observation ; le plan $P_0$ est situé sur l'axe $\Delta_X$ entre les points A et A' où la surface de la tache 8 est minimale ; le plan $P_0$ est orthogonal à l'axe $\Delta_X$.

Ce qui est décrit ci-dessus correspond au cas où le faisceau 3 est correctement focalisé sur le support 5, au point 3.

Dans le cas contraire, on constate que se forme sur le plan $P_0$ une tache focalisée déformée par rapport à la tache 8 par allongement selon des directions parallèles aux axes OY et OZ selon que le faisceau converge en avant ou en arrière de la surface de référence du disque 5, c'est-à-dire dans le cadre de l'invention de la surface des plages vierges 73.

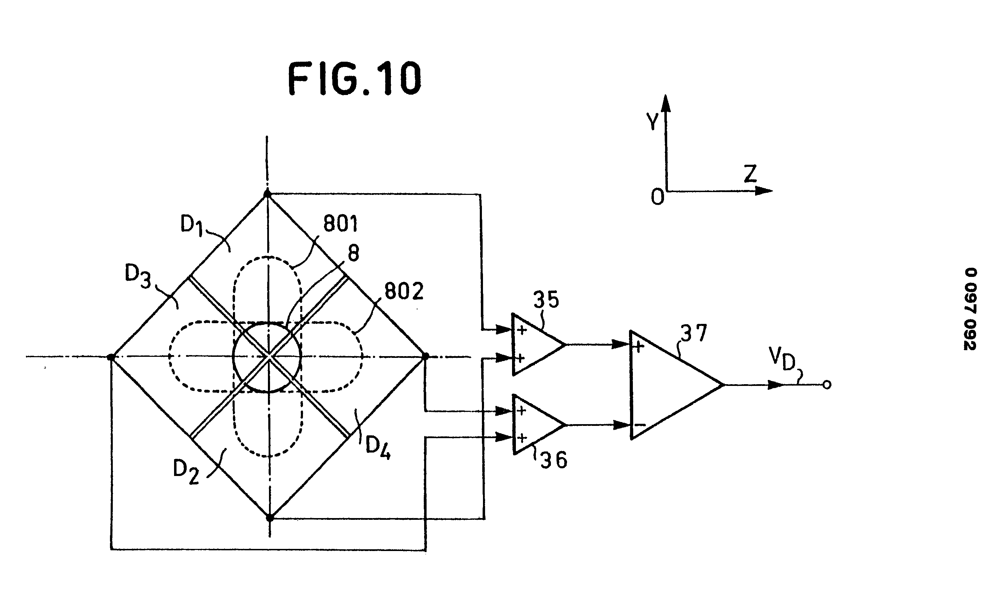

Dans le plan d'observation $P_0$, on place des moyens de détection de la forme de la tache focalisée, ces moyens étant par exemple réalisés à l'aide de cellules photo-électriques comme illustré par la figure 10, délivrant un signal de contrôle de focalisation. Les moyens de détection comportent dans ce mode de réalisation quatre cellules photoélectriques $D_1$, $D_2$, $D_3$, $D_4$, placées selon un carré dont les diagonales sont parallèles aux axes OY et OZ, et placées de telle sorte que la tache focalisée 8 se forme sensiblement au milieu du carré.

Les cellules appartenant à une même diagonale sont reliées aux entrées d'un additionneur ; c'est-à-dire sur la figure 10, les cellules $D_1$ et $D_2$ sur la diagonale parallèle à l'axe OY, aux entrées de l'additionneur 35 et les cellules $D_3$ et $D_4$, sur l'autre diagonale, aux entrées d'un additionneur 36. Les additionneurs sont reliés à un amplificateur différentiel 37 : l'additionneur 35 à l'entrée positive de l'amplificateur et l'additionneur 36 à son entrée négative. A la sortie de l'amplificateur 37 est disponible le signal électrique $V_D$ qui constitue le signal de contrôle de focalisation.

Les trois formes de taches de focalisation susceptibles de se former dans le plan d'observation $P_0$ sont représentées sur la figure 10 : le contour 8, de surface minimale, mentionné ci-dessus ; un contour 801 allongé selon l'axe OY, et un contour 802 allongé selon l'axe OZ. Il est clair que, compte tenu du branchement des cellules photo-électriques indiqué ci-dessus, le signal $V_D$ est nul lorsque la focalisation est correcte (tache 8, sensiblement circulaire), positif lorsque la surface des plages 73 s'est éloignée de l'objectif $O_b$ (tache 801) et négatif lorsque la surface des plages 73 s'est rapprochée de l'objectif $O_b$ (tache 802).

Par ce procédé le signal $V_D$ est représentatif de l'erreur de focalisation du faisceau f, en amplitude et en signe. Selon l'invention le signal $V_D$ est échantillonné pendant les fenêtres d'analyse et mémorisé entre deux échantillons par les dispositifs qui ont été décrits en relation avec les figures 5 et 8.

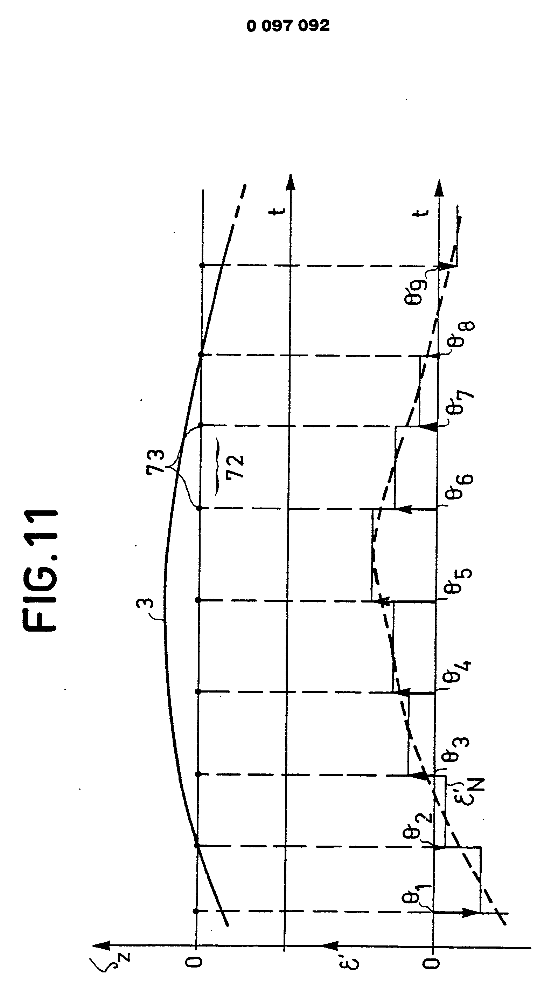

Le diagramme de la figure 11 illustre un exemple d'évolution du signal d'erreur d'asservissement vertical $\varepsilon'$ en fonction du temps. On se place dans cet exemple plus particulièrement dans le cas du second mode d'exécution. La courbe de la partie supérieure du diagramme représente la position $\delta_z$ selon un axe de coordonnée verticale de la tache d'exploration 3 par rapport au plan de référence, d'altitude zéro, constitué par la surface des plages vierges 73. La courbe $\varepsilon'$ sur la partie inférieure du diagramme représente schématiquement l'évolution correspondante en fonction du temps du signal lissé d'erreur de focalisation $\varepsilon'$. Les fenêtres d'analyse correspondantes aux passages des plages vierges dans la zone éclairée par la tache d'exploration 3 sont représentées de façon simplifiée comme les plages vierges par des points repérés $\theta_1$ à $\theta_9$. Sur le même diagramme est représentée la courbe en marches d'escalier du signal $\varepsilon'_N$ tel que mémorisé entre chaque passage des plages vierges 73. L'intervalle de temps s'écoulant entre deux fenêtres d'analyse dépend de la vitesse de rotation du disque et de la longueur des zones 72.

De façon plus brève, le second procédé du type décrit dans le premier brevet français précité, consiste après avoir introduit une dissymétrie dans le faisceau d'exploration, à former l'image de la tache de focalisation sur des cellules photoélectriques en nombre au moins égal à deux, et à mesurer les distorsions de cette image. Les signaux délivrés par les cellules photoélectriques sont fonction de l'écart existant entre le plan de focalisation et le plan de référence constitué dans le cadre de la présente invention par la surface des plages vierges.

Pour l'initialisation du dispositif de focalisation, un procédé analogue à celui décrit dans la demande de brevet français FR-A-2 330 062 peut être mis en œuvre.

De façon générale, la boucle des circuits d'asservissement de focalisation est ouverte et un signal en dent de scie est transmis à un des solénoïdes dont sont pourvus les moyens d'asservissement de la position verticale de l'objectif $O_b$, par exemple le solénoïde B sur la figure 1 ou encore un solénoïde supplémentaire spécifique à cet usage. L'objectif va donc se mouvoir d'une position de repos à une position pour laquelle la tache de focalisation va se trouver dans un plan proche du plan de référence tel qu'il a été défini.

Selon une première variante de réalisation, si la tache a une dimension radiale au moins de l'ordre de grandeur de la largeur des zones interpistes, quelque soit sa position radiale, les circuits d'identification de drapeaux 122 du dispositif décrit en relation avec la figure 8 vont commencer à produire des signaux de commande $S_C$ dont l'instant d'apparition peut être utilisé pour générer un signal de fermeture de boucle d'asservissement vertical. La tache est alors située dans un plan suffisamment proche de la surface de référence pour que les circuits d'asservissement vertical puissent « s'accrocher » sur cette surface.

Dans une autre variante, si la tache est de dimension radiale plus faible que la largeur des zones interpistes ou encore dans le premier mode d'exécution, on peut utiliser la valeur de l'amplitude du signal $V_D$ comparée à un seuil de référence pour générer un signal de fermeture de boucle d'asservissement vertical.

En cas de perte de focalisation accidentelle, les mêmes procédures peuvent être mises en œuvre selon l'enseignement de la demande de brevet précitée.

L'invention n'est pas limitée aux seuls exemples de réalisation qui ont été décrits et notamment aux seuls dispositifs de mise en œuvre du procédé décrits en relation avec les figures 5 et 8.

**Revendications**

1. Support d'information comportant des motifs de prégravure (710, 711, 74) agencés dans une surface de référence dont une partie lisse entoure complètement chacun desdits motifs ; lesdits motifs matérialisant, sous forme d'éléments, des pistes adjacentes (7) ayant un pas régulier ; chacun desdits éléments de piste étant subdivisé en zones non contiguës (72) réservées à l'emmagasinage des données et séparées l'une de l'autre par des zones intermédiaires (71) contenant uniquement des motifs de prégravure, ladite partie lisse renfermant des portions (73) distribuées le long de l'un quelconque desdits éléments de piste ; lesdites portions (73) pouvant contenir entièrement un contour circulaire (3) centré sur l'axe moyen (70) de l'élément de piste correspondant et dont le diamètre avoisine ledit pas.

2. Support selon la revendication 1, caractérisé en ce que lesdites portions (73) sont toutes situées dans lesdites zones intermédiaires où elles occupent une position prédéterminée par rapport auxdits motifs de prégravure (74).

3. Support selon la revendication 1, caractérisé en ce que lesdites données étant transcrites par une suite de régions gravées (720) et non gravées (73), lesdites portions occupent des régions non gravées.

4. Support selon la revendication 1, caractérisé en ce que deux motifs de prégravure (74) se suivant à l'intérieur d'une zone intermédiaire encadrent l'une desdites portions.

5. Support selon la revendication 1, caractérisé en ce que l'une desdites portions (73) occupe une position extrême à l'intérieur d'une zone intermédiaire.

6. Support selon la revendication 1, caractérisé en ce que ladite portion (73) recouvre l'ensemble des axes moyens desdits éléments de piste ; les contours circulaires encerclés par ladite région formant un alignement orthogonal ($\Delta R$) par rapport auxdits axes moyens.

7. Support selon l'une quelconque des revendications précédentes, caractérisé en ce que lesdits axes moyens sont incurvés et ont un centre (o) confondu avec une surface de référence de forme annulaire.

8. Dispositif d'exploration d'un support d'information selon l'une quelconque des revendications précédentes comportant des moyens optiques d'exploration projetant dans ladite surface de référence une tache optique focalisée destinée à interagir uniquement avec l'un quelconque des éléments de piste ; des moyens de réglage (B) de la focalisation de ladite tache étant commandés par des moyens photodétecteurs (10) qui recueillent une fraction du rayonnement qui émerge de la portion de ladite surface de référence éclairée par ladite tache, ladite tache ne débordant pas ledit contour circulaire (3) lorsqu'elle est centrée sur l'axe moyen (70) de l'élément de piste en cours d'exploration et lorsqu'elle franchit l'une desdites portions ; la valeur échantillonnée ($\varepsilon$'N) du signal ($V_D$) produit par les moyens photodétecteurs lors dudit franchissement assurant ladite focalisation.

9. Dispositif selon la revendication 8, caractérisé en ce que l'échantillonnage de ladite valeur est déterminé par un circuit d'identification (123) des motifs de prégravure (74).

10. Dispositif selon la revendication 8, caractérisé en ce que l'échantillonnage de ladite valeur est déterminé par un circuit (12) détectant le passage de ladite tache d'une région gravée à une région non gravée qui la suit immédiatement.

## Claims

1. An information carrier comprising prerecorded motives (710, 711, 74) disposed in a reference surface, an even part of which completely surrounds each of said motives ; said motives materializing, in the form of elements, adjacent tracks (7) having a regular spacing ; each of said track elements being subdivided into not adjoining areas (72) reserved for the storage of data and separated from each other by intermediates areas (71) solely containing prerecorded motives, said even part enclosing portions (73) distributed along any one of said track elements ; said portions (73) being apt to contain entirely a circular contour line (3) centered on the middle axis (70) of the corresponding track element and the diameter of which corresponds approximately to said spacing.

2. A carrier according to claim 1, characterized in that said portions (73) are all situated in said intermediate ares where they occupy a position which is predetermined with respect to said prerecorded motives (74).

3. A carrier according to claim 1, characterized in that, said data being transcribed by a succession of recorded (720) and non-recorded areas (73), said portions occupy non-recorded areas.

4. A carrier according to claim 1, characterized in that two prerecorded motives (74) which follow each other within an intermediate area, surround one of said portions.

5. A carrier according to claim 1, characterized in that one of said portions (73) occupies an end position within an intermediate zone.

6. A carrier according to claim 1, characterized in that said portion (73) covers the entirety of the middle axes of said track elements ; the circular contour lines surrounded by said area forming an orthogonal alignment ($\Delta R$) with respect to said middle axes.

7. A carrier according to any one of the preceding claims, characterized in that said middle axes are incurved and have a center (o) which coincides with a reference surface of annular shape.

8. A device for exploring an information carrier according to any one of the preceding claims, comprising optical exploration means projecting onto said reference surface a focalized light spot which is to interact solely with any one of the track elements, regulating means (B) of the focalisation of said spot being controlled by photodetector means (10) which receive a fraction of the radiation which emerges from the portion of said reference surface illuminated by said spot, said spot not extending beyond said circular contour line (3) when it is centered on the middle axis (70) of the track element which is about to be explored and when it passes over one of said portions ; the sampled value ($\varepsilon$'N) of the signal ($V_D$) produced by the photodetector means during said passage ensuring said focalisation.

9. A device according to claim 8, characterized in that the sampling of said value is determined by an identification circuit (123) of the prerecorded motives (74).

10. A device according to claim 8, characterized in that the sampling of said value is determined by a circuit (12) detecting the passage of said spot from a recorded region to an immediately following non-recorded region.

## Patentansprüche

1. Informationsträger mit Vorprägungs-Motiven (710, 711, 74), die in einer Bezugsoberfläche angeordnet sind, von der ein glatter Teil jedes dieser Motive völlig umgibt, wobei diese Motive in Form von Elementen benachbarte Spuren (7) mit regelmäßigem Abstand bilden und jedes dieser Spurelemente in nicht-aneinandergrenzende Bereiche (72) unterteilt ist, die für die Speicherung von Daten reserviert sind und voneinander durch Zwischenbereiche (71) getrennt sind, die nur Vorprägungs-Motive aufweisen, wobei der glatte Teil Abschnitte (73) umfaßt, die entlang irgendeines der Spurelemente verteilt sind und einen ganzen kreisförmigen Umriß (3) aufweisen können, der auf die Mittelachse (70) des entsprechenden Spurelements zentriert ist und dessen Durchmesser dem genannten Abstand ähnelt.

2. Träger nach Anspruch 1, dadurch gekennzeichnet, daß die Abschnitte (73) sich alle in den Zwischenbereichen befinden, wo sie eine vorbestimmte Lage in bezug auf die Vorprägungs-Motive (74) einnehmen.

3. Träger nach Anspruch 1, dadurch gekennzeichnet, daß die Daten durch eine Folge von geprägten (720) und nicht-geprägten Bereichen (73) übertragen werden, wobei die Abschnitte nicht-geprägte Bereiche belegen.

4. Träger nach Anspruch 1, dadurch gekennzeichnet, daß zwei Vorprägungs-Motive (74) innerhalb eines einen dieser Abschnitte einrahmenden Zwischenbereichs aufeinanderfolgen.

5. Träger nach Anspruch 1, dadurch gekennzeichnet, daß einer der Abschnitte (73) eine Endlage innerhalb eines Zwischenbereichs einnimmt.

6. Träger nach Anspruch 1, dadurch gekennzeichnet, daß dieser Abschnitt (73) die Gesamtheit der Mittelachsen der Spurelemente bedeckt, wobei die von diesem Bereich eingeschlossenen kreisförmigen Umrisse eine orthogonal fluchtende Linie (ΔR) in bezug auf die Mittelachsen bilden.

7. Träger nach einem beliebigen der vorstehenden Ansprüche, dadurch gekennzeichnet, daß die Mittelachsen gekrümmt sind und eine Mitte (o) aufweisen, die mit einer ringförmigen Bezugsoberfläche zusammenfällt.

8. Vorrichtung zur Abtastung eines Informationsträgers nach einem beliebigen der vorstehenden Ansprüche, mit optischen Abtastmitteln, die auf die Bezugsoberfläche einen gebündelten Licht-Fleck richten, der nur mit einem beliebigen der Spurelemente zusammenwirkt, wobei Mittel (B) zur Einstellung der Fokalisierung des Flecks von Photodetektormitteln (10) gesteuert werden, die einen Bruchteil der Strahlung auffangen, die von dem von dem Fleck erleuchteten Abschnitt der Bezugsoberfläche ausgeht, wobei der Fleck nicht über den kreisförmigen Umriß (3) hinausgeht, wenn er auf die Mittelachse (70) des gerade abzutastenden Spurelements zentriert ist und wenn er einen dieser Abschnitte überquert, wobei der von den Photodetektormitteln während dieses Überquerens erzeugte Abtast-Wert ($\varepsilon'N$) des Signals ($V_D$) die Fokalisierung bewirkt.

9. Vorrichtung nach Anspruch 8, dadurch gekennzeichnet, daß die Abtastung des Werts von einem Identifikationskreis (123) der Vorprägungs-Motive (74) bestimmt wird.

10. Vorrichtung nach Anspruch 8, dadurch gekennzeichnet, daß die Abtastung des Werts von einem Kreis (12) bestimmt wird, der den Übergang des Flecks von einem geprägten Bereich zu einem direkt darauffolgenden nicht-geprägten Bereich feststellt.

FIG.1

0 097 092

FIG. 2

FIG. 3

FIG. 5

FIG.4

CODE BINAIRE

. . .1. . . .     . . .0. . . .     . . .1. . . .     . . .1. . . .

CODE IMPULSIONNEL

T

70   7   720   73   3   720   720

0 097 092

# FIG. 6

# FIG. 7

# FIG.8

FIG.9

# FIG.10

0 097 092

FIG.11